**Europäisches Patentamt**

**European Patent Office**

**Office européen des brevets**

(11) Veröffentlichungsnummer : **0 363 704 B1**

# (12) EUROPÄISCHE PATENTSCHRIFT

(45) Veröffentlichungstag der Patentschrift :
**15.04.92 Patentblatt 92/16**

(51) Int. Cl.$^5$ : **C02F 1/72**

(21) Anmeldenummer : **89117503.6**

(22) Anmeldetag : **22.09.89**

(54) **Verfahren zur Beseitung von Hydroxylammoniumsalzen aus solche enthaltenden Abwässern.**

(30) Priorität : **06.10.88 DE 3834030**

(43) Veröffentlichungstag der Anmeldung :
**18.04.90 Patentblatt 90/16**

(45) Bekanntmachung des Hinweises auf die
Patenterteilung :
**15.04.92 Patentblatt 92/16**

(84) Benannte Vertragsstaaten :
**BE CH DE ES FR GB IT LI NL**

(56) Entgegenhaltungen :
**DE-A- 1 517 716**

(56) Entgegenhaltungen :
**BERICHTE DER DEUTSCHEN CHEMISCHEN
GESELLSCHAFT, Jahrgang 33, 1900, Band 1;
Seite 30 - 42, G. v. Knorre et al.: "Ueber die
Oxydation des hydroxylamins";**

(73) Patentinhaber : **BASF Aktiengesellschaft
Carl-Bosch-Strasse 38
W-6700 Ludwigshafen (DE)**

(72) Erfinder : **Fuchs, Hugo, Dr.
Egellstrasse 28
W-6700 Ludwigshafen (DE)**
Erfinder : **Agar, David, Dr.
Eichhornshoehe 37 a
W-6149 Rimbach (DE)**

## Beschreibung

Bei der Herstellung von Hydroxylammoniumsalzen oder deren Weiterverarbeitung ist es häufig nicht zu vermeiden, daß Hydroxylammoniumsalze enthaltende Abwässer anfallen. Da Hydroxylammoniumsalze enthaltende Abwässer für biologische Kläranlagen unzuträglich sind, es ist erforderlich, diese aus den Abwässern zu beseitigen.

Aus der US-Patentschrift 4 147 623 ist ein Verfahren bekannt, bei dem man Lösungen von Hydroxylammoniumsalzen zunächst auf einen pH-Wert von 6 bis 11 einstellt und dann über einen Kationenaustauscher leitet. Dieses Verfahren hat den Nachteil, daß die Kationenaustauscher relativ schnell erschöpft sind und somit eine sichere Entfernung von Hydroxylammoniumsalzen nicht gewährleistet ist und andererseits beim Eluieren der verbrauchten Kationenaustauscher verdünnte Hydroxylammoniumsalzlösungen anfallen, die wiederum behandlungsbedürftig sind.

In der japanischen Offenlegungsschrift 58/034092 wird ein Verfahren beschrieben, bei dem man zunächst spezielle Bakterien in Gegenwart von $Fe^{2+}$-Ionen kultiviert und dann Hydroxylamin enthaltende Lösungen mit der Bakterienkultur mischt und belüftet und anschließend die verbrauchte Bakterienkultur durch Dekantieren abtrennt. Eine absolut sichere Handhabung ist im Hinblick auf schwankende Konzentrationen an Hydroxylammoniumsalzen nicht gewährleistet.

Aus Berichte der deutschen chemischen Gesellschaft, Band 33 (1900), Seite 36 ist auch schon bekannt, daß man angesäuerte Hydroxylammoniumsalzlösungen durch Zugeben von feinzerteiltem Mangansuperoxidhydrat zersetzt. Wie Hydroxylammoniumsalze enthaltende Abwässer zu behandeln sind, ist daraus nicht zu entnehmen. Das gleiche gilt für die DE-A- 1 517 716, in der die Desodorierung von organische Stoffe enthaltenden Abwässern beschrieben wird.

Es war deshalb die technische Aufgabe gestellt, ein Verfahren zur Beseitigung von Hydroxylammoniumsalzen aus Abwässern zur Verfügung zu stellen, das unabhängig von der Konzentration von Hydroxylammoniumsalzen in den Abwässern deren sichere Beseitigung gewährleistet und einfach durchführbar ist.

Diese Aufgabe wird gelöst in einem Verfahren zur Beseitigung von Hydroxylammoniumsalzen aus solche enthaltenden Abwässern durch Behandeln mit Mangan-IV-oxiden im Überschuß im sauren Bereich dadurch gekennzeichnet, daß man Hydroxylammoniumsalze enthaltende Abwässer mit. einem pH-Wert von 1 bis 4 bei einer Temperatur von 10 bis 100°C durch eine mit Mangan-IV-oxiden mit einer Korngröße von 0,1 bis 10 mm in einem Überschuß von mindestens 0,5 Mol Mangan-IV-oxid je Mol Hydroxylamin beschickte Behandlungszone leitet und Mangan-IV-oxide in dem Maße zugibt wie sie verbraucht werden.

Das neue Verfahren hat den Vorteil, daß die Hydroxylammoniumsalze auf einfache Weise sicher zerstört werden. Weiter hat das neue Verfahren den Vorteil, daß es einfach kontinuierlich durchführbar ist. Ferner hat das neue Verfahren den Vorteil, daß die verwendeten Manganoxide leicht wiedergewinnbar sind.

Die zu behandelnden Abwässer enthalten Hydroxylammoniumsalze, z.B. Salze von starken Mineralsäuren, wie Schwefelsäure, Salpetersäure, Chlorwasserstoffsäure oder niederen Fettsäuren, z.B. mit bis zu 4 Kohlenstoffatomen. Der Gehalt an Hydroxylammoniumsalzen beträgt in der Regel bis zu 30 Gew.%, insbesondere 0,01 bis 20 Gew.%. Neben Hydroxylammoniumsalzen können die zu behandelnden Lösungen auch andere Alkali- oder Ammoniumsalze der genannten Säuren enthalten. Besonders bewährt hat sich das Verfahren bei der Behandlung von Hydroxylammoniumsulfat- und/oder Hydroxylammoniumammoniumsulfatlösungen, die daneben Ammoniumsulfat und/oder Schwefelsäure enthalten. Eine typische Lösung enthält z.B. 0,05 bis 5 Gew.% Hydroxylammoniumammoniumsulfat sowie 0,5 bis 25 Gew.% Ammoniumsulfat.

Für die Behandlung verwendet man Mangan-IV-oxide, wie Mangandioxid oder Mangandioxidhydrat in einer Korngröße von 0,1 bis 10 mm. Besonders bewährt hat sich frisch hergestelltes Mangandioxid. Mangan-IV-oxid kann auch auf Träger wie Siliciumdioxid oder Silikate, inbesondere Siliciumdioxid wie Kieselgur, niedergeschlagen angewandt werden. Solche Trägerkatalysatoren haben vorteilhaft einen Gehalt von 20 bis 60 Gew.% Mangandioxid, bezogen auf aktive Masse und Träger.

Je Mol Hydroxylamin in Form von Hydroxylammoniumsalzen, wendet man mindestens 0,5 Mol Mangan-IV-oxid an. Vorzugsweise hält man einen Überschuß von 2 bis 10 Mol Mangan-IV-oxid ein.

Die Behandlung wird bei einem pH-Wert von 1 bis 4, insbesondere von 1 bis 3 durchgeführt. Ferner hält man hierbei eine Temperatur von 10 bis 100°C, insbesondere von 20 bis 50°C, ein.

Ferner hat es sich bewährt, eine Verweilzeit von 0,1 bis 120 Minuten, insbesondere von 1 bis 20 Minuten einzuhalten.

Die Manganoxide werden in einer Behandlungszone, z.B. einer rohrförmigen Behandlungszone, angeordnet, z.B. von unten nach oben oder von oben nach unten, die zu behandelnde Lösung durchgeleitet, wobei man Manganoxide in dem Maße zugibt, wie sie verbraucht werden.

Zweckmäßig wird die so behandelte Lösung mit alkalischen Mitteln, wie Alkali- oder Erdalkalihydroxiden, z.B. Natriumhydroxid oder Kalziumhydroxid, behandelt und bei einem pH-Wert von über 7, z.B. von 8 bis 10,

2

Manganhydroxid ausgefällt, dieses durch Dekantieren oder Filtrieren abgetrennt und durch Oxidieren mit molekularen Sauerstoff enthaltenden Gasen z.B. Luft wiederum in Mangandioxid überführt. Dieses wird wiederum für die Behandlung der Abwässer verwendet.

Das Verfahren nach der Erfindung sei an folgenden Beispielen veranschaulicht.

Beispiel 1

Ein Glasrohr von 35 mm Durchmesser und einer Länge von 400 mm, das am unteren Ende mit einer Fritte versehen ist, wurde mit 100 g Mangandioxid in Form von 1,5 mm Strangpresslingen beschickt. Durch das Rohr wurden von oben nach unten stündlich 500 ml Hydroxylammoniumsulfat enthaltendes Abwasser mit einem pH-Wert von 2,9 bei einer Temperatur von 25°C über das Mangandioxid geleitet. Das verwendete Abwasser hatte einen Gehalt an Hydroxylammoniumsulfat, berechnet als Hydroxylamin, von 0,77 g/l.

Das aus dem Glasrohr austretende Wasser hatte einen pH-Wert von 3,3 und einen Gehalt von 690 mg/l Mangan, Hydroxylamin war nicht mehr nachweisbar. Aus dem so erhaltenen Abwasser wurde durch Zugabe von Natronlauge bis zu einem pH-Wert von 10 Manganhydroxid ausgefällt. Der Niederschlag wurde abfiltriert und mit Luftsauerstoff wieder zu Mangandioxid oxidiert, das wieder verwendbar ist. Das Filtrat hatte einen Mangangehalt von 1 mg/l.

Beispiel 2

Man verfährt wie in Beispiel 1 beschrieben, verwendet jedoch Abwasser mit einem Gehalt an Hydroxylammoniumsulfat, berechnet als Hydroxylamin von 11,2 g/l und einem pH-Wert von 2,1. Das behandelte Abwasser war frei von Hydroxylamin und hatte einen pH-Wert von 3,5. Nach Ausfällen von Manganhydroxid bei pH 10 und Filtration hatte das Filtrat einen Mangangehalt von 3 mg/l.

**Patentansprüche**

1. Verfahren zur Beseitigung von Hydroxylammoniumsalzen aus solche enthaltenden Abwässern durch Behandeln mit Mangan-IV-oxiden im Überschuß im sauren Bereich, dadurch gekennzeichnet, daß man Hydroxylammoniumsalze enthaltende Abwässer mit einem pH-Wert von 1 bis 4 bei einer Temperatur von 10 bis 100°C, durch eine mit Mangan-IV-oxiden mit einer Korngröße von 0,1 bis 10 mm in einem Überschuß von mindestens 0,5 Mol Mangan-IV-oxid je Mol Hydroxylamin beschickte Behandlungszone leitet und Mangan-IV-oxide in dem Maße zugibt, wie sie verbraucht werden.

2. Verfahren nach Anspruch 1, dadurch gekennzeichnet, daß man eine Verweilzeit von 0,1 bis 120 Minuten einhält.

3. Verfahren nach den Ansprüchen 1 und 2, dadurch gekennzeichnet, daß man das so behandelte Abwasser mit alkalischen Mittel versetzt und bei einem pH-Wert > 7 Manganhydroxid ausfällt, abtrennt und anschließend mit molekularem Sauerstoff enthaltenden Gasen zu Mangan-IV-oxiden oxidiert und wiederum zurückführt.

**Claims**

1. A process for eliminating hydroxylammonium salts from wastewaters containing such salts, by treatment with excess manganese(IV) oxides in the acidic range, wherein wastewaters containing hydroxylammonium salts and having a pH of from 1 to 4 are passed, at from 10 to 100°C, through a treatment zone charged with manganese(IV) oxides having a particle size of from 0.1 to 10mm in an excess of at least 0.5 mol of manganese(IV) oxide is added at the rate at which it is consumed.

2. A process as claimed in claim 1, wherein a residence time of from 0. 1 to 120 minutes is maintained.

3. A process as claimed in claim 1 or 2, wherein an alkaline agent is added to the wastewater treated in this manner and manganese hydroxide is precipitated at a pH of > 7, separated off and then oxidized with a gas containing molecular oxygen to manganese(IV) oxide, which is recycled.

**Revendications**

1. Procédé pour l'élimination de sels d'hydroxylammonium d'eaux usées qui en contiennent, par traitement par un excès d'oxydes de manganèse-IV dans la plage acide, caractérisé en ce qu'on fait passer les eaux usées contenant des sels d'hydroxylammonium avec un pH de 1 à 4, à une température de 10 à 100°C, à travers une zone de traitement chargée d'oxydes de manganèse-IV ayant une grosseur de grains de 0,1 à 10 mm, en un excès d'au moins 0,5 mole d'oxyde de manganèse-IV par mole d'hydroxylamine, et on ajoute des oxydes de manganèse-IV dans la mesure où ils sont consommés.

2. Procédé selon la revendication 1, caractérisé en ce qu'on respecte une durée de séjour de 0,1 à 120 mn.

3. Procédé selon la revendication 1 ou 2, caractérisé en ce qu'on additionne les eaux usées ainsi traitées de substances alcalines, on précipite de l'hydroxyde de manganèse à un pH supérieur à 7, on le sépare, puis on le transforme en oxydes de manganèse-IV par oxydation avec des gaz contenant de l'oxygène moléculaire et on réutilise ces oxydes